# EUROPEAN PATENT APPLICATION

(11) **EP 2 955 342 A1**
(43) Date of publication of application: **16.12.2015**
(21) Application number: 14305902.0
(22) Date of filing: 13.06.2014
(51) Int. Cl.: F01L 1/14, F16H 53/06

(54) **Cam follower unit**

(71) Applicant: Aktiebolaget SKF, 415 50 Göteborg (SE)
(72) Inventor: Hauvespre, Benoît, 37230 Saint Etienne de chigny (FR); Viault, Samuel, 37360 SAINT-ANTOINE-DU-ROCHER (FR); Berruet, Nicolas, 37260 ARTANNES SUR INDRE (FR); Champalou, François, 41150 CHAUMONT SUR LOIRE (FR)
(74) Representative: Myon, Gérard Jean-Pierre

(57) **Abstract**

This cam follower unit (2) comprises a tappet (20), a roller (22) adapted to cooperate with a cam, said roller (22) being mounted rotatably on a pin (24) which is mounted in holes (204) provided on two lateral ears (200, 202) of said tappet (20), the pin (24) being retained in the tappet (20), in the longitudinal direction (X22) of the pin (24), by elastic spring retainers (26) mounted against the ends (240, 242) of the pin (24), inside the holes (204) of the lateral ears (200, 202). The elastic spring retainers (26) comprise a central portion (260), which is adapted to be in contact with the ends (240, 242) of the pin (24), the central portion (260) defining a plane (P26) perpendicular to the central axis (X22) of the pin (24), and a peripheral portion (262) adapted to exert a radial elastic force (F1) against an internal wall (S204) of the holes (204) which is circular and generated by a straight line (G204). The peripheral portion (262) extends outwardly from the central portion (260) and away from the pin (24) along directions (A262) inclined with respect to the plane (P26) defined by the central portion (260).

## Description

The invention relates to a cam follower unit.

Cam follower units comprise a tappet and a roller adapted to cooperate with a cam, said roller being mounted rotatably on a pin which is mounted in holes provided in lateral ears of the tappet.

It is known to retain the pin in the tappet in the longitudinal direction of the pin with elastic rings or circlips which are mounted in grooves provided on the internal wall of the holes of the lateral ears. Such grooves are difficult to obtain by turning and therefore imply a high cost.

It is also known to retain the pin inside the tappet by caulking. This technique requires performing deformations on the ends of the pin against the ears of the tappet, which are also deformed and can be damaged. Moreover, as the pin is subjected to a hardening induction treatment, such a treatment must be performed only on localized portions of the pin to allow its ends to be deformed. The caulking solution therefore implies complex operations.

The aim of the invention is to provide a new cam follower unit in which the axial retaining of the pin is realized with simpler and less costly means than in the prior art.

To this end, the invention concerns a cam follower unit comprising a tappet, a roller adapted to cooperate with the cam, said roller being mounted rotatably on a pin which is mounted in holes provided on two lateral ears of said tappet, the pin being retained in the tappet, in the longitudinal direction of the pin, by elastic spring retainers mounted against the ends of the pin, inside the holes of the lateral ears. This cam follower unit is characterized in that the elastic spring retainers comprise a central portion, which is in planar contact with the ends of the pin, the central portion defining a plane perpendicular to the central axis of the pin, and a peripheral portion adapted to exert a radial elastic force against an internal wall of the holes which is circular and generated by a straight line, and in that the peripheral portion extends outwardly from the central portion and away from the pin along directions inclined with respect to the plane defined by the central portion.

Thanks to the invention, the pin is retained in the tappet without having to provide the walls of the holes of the tappet with grooves. The cam follower unit is therefore faster and simpler to manufacture, as it does not need further machining operations.

According to further aspects of the invention which are advantageous but not compulsory, such a cam follower unit may incorporate one or several of the following features:
- The peripheral portion is frustoconical.
- The peripheral portion is formed by circumferential elastic tongues.
- When the tongues of the elastic spring retainers are unstressed, the outer diameter of the elastic spring retainers is larger than the internal diameter of the holes of the lateral ears of the tappet.
- The elastic spring retainers are Belleville washers.
- The elastic spring retainers are made of a metallic material.
- The elastic spring retainers are made of a synthetic or plastic material.
- An axial force exerted by the pin on the central portion of the retainer provokes an increase of the radial elastic force.

The invention will now be explained in reference to the annexed figures, as an illustrative example. In the annexed figures:
- figure 1 is a perspective view of a portion of a cam follower unit according to the invention,
- figure 2 is a transversal sectional view of the cam follower unit of figure 1,
- figure 3 is a view, at a larger scale, of detail III on figure 2.

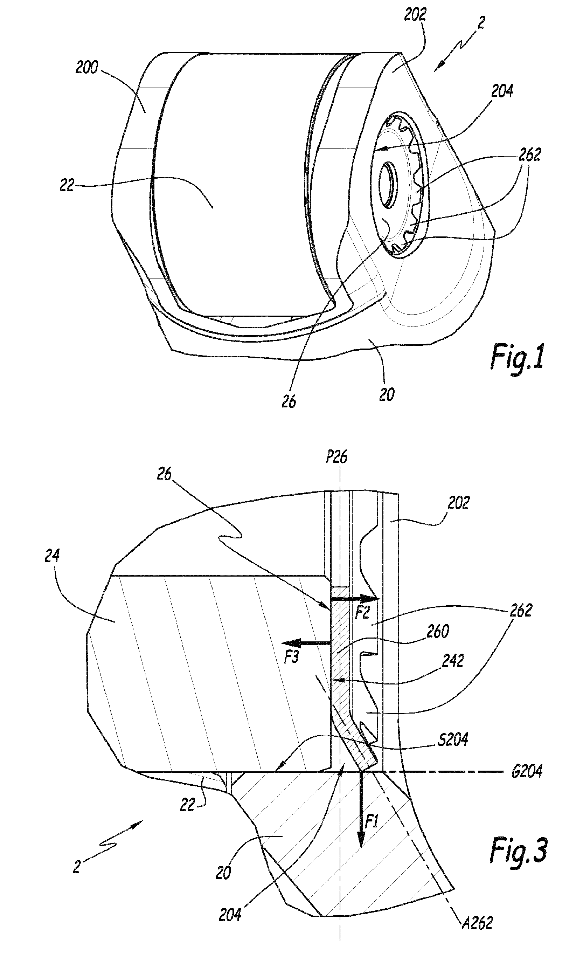

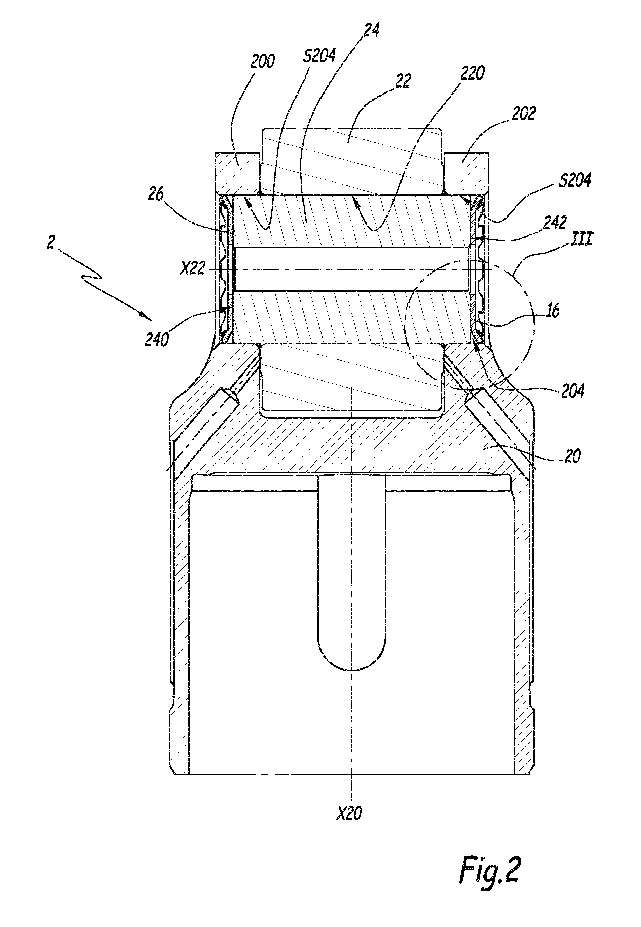

A cam follower unit 2 is represented on figures 1 to 3. Cam follower unit 2 comprises a tappet 20, adapted to move in translational motion along a longitudinal axis X20 in a non-represented housing. Cam follower unit 2 also includes a roller 22, adapted to cooperate with a non-shown cam, for example in a valve control system or a fuel pump for an internal combustion engine. Roller 22 is rotatably mounted on a cylindrical pin 24, which is inserted in a central bore 220 of roller 22. Roller 22 is adapted to rotate around an axis X22 which is generally perpendicular to axis X20.

Tappet 20 comprises two lateral ears 200 and 202, which extend parallely to axis X20 and perpendicularly to axis X22. Each ear 200 and 202 comprises a circular hole 204 in which pin 24 is inserted.

In order to retain pin 24 in ears 200 and 202 along axis X22, which corresponds to the longitudinal direction of pin 24, cam follower unit 2 comprises elastic spring retainers 26, which are mounted against a first end 240 and a second end 242 of pin 24. Spring retainers 26 are mounted inside holes 204 and are adapted to exert a radial elastic force F1 on an internal wall S204 of holes 204. Internal wall S204 is circular and generated by the revolution of a generatrix G204, which is a straight line, around axis X22. In other words, internal wall S204 is therefore not interrupted by grooves.

Thanks to spring retainers 26, pin 24 is axially retained by the elastic radial force exerted by spring retainers 26, without having to realize complex machining operations on the internal wall of holes 204, as it is the case when elastic rings are used.

Each elastic spring retainer 26 comprises a central annular portion 260, which is radial with respect to axis X22 and is in planar contact with end 240 or 242 of pin 24. Central portion 260 defines a plane P26 which is substantially perpendicular to central axis X22. Central portion 260 is outwardly extended by a peripheral portion formed by circumferential elastic tongues 262, which are regularly distributed around the circumference of spring retainers 26, and cooperate with the internal wall of one holes 204 to exert the radial elastic force F1.

Elastic tongues 262 extend away from the respective ends 240 and 242 along directions A262 which are inclined with respect to plane P26.

In case pin 24 is subjected to a translation and/or an axial force transmitted by the roller along axis X22, pin 24 exerts an axial force F2 on central portion 260 of a retainer. Because of the inclination of tongues 262, the axial force F2 provokes a radial enlargement of this retainer 26 and an increase of radial elastic force F1, which prevents this retainer from moving with respect to holes 204 along axis X22 under the action of pin 24. This occurs because the tips of the tongues 262 tend to superficially penetrate or anchor into internal wall 204. The stronger F2, the stronger this anchoring effect. Pin 24 is therefore retained in holes 204 by a reaction force F3.

Elastic spring retainers 26 are manufactured so that in an unstressed configuration of tongues 262 which occurs when elastic spring retainers 26 are not mounted in holes 204, the outer diameter of elastic spring retainers 26 is larger than the internal diameter of holes 204. Therefore, when elastic spring retainers 26 are inserted into holes 204, tongues 262 are bent or retracted inwardly by the action of the internal wall of holes 204, so that tongues 262 exert radial elastic force F1.

Elastic spring retainers 26 may be made of a metallic material. Alternatively, elastic spring retainers 26 may also be made of a synthetic or plastic material, which must be elastic and hard enough to support axial efforts exerted by the pin.

According to a non-shown embodiment of the invention, elastic spring retainers 26 may have a different shape, for example, elastic spring retainers 26 may be Belleville washers. In such a case, the peripheral portion of retainers 26 is a continuous ring which radially extends the central portion.

The embodiments considered here above can be combined to generate further embodiments of the invention.

## Claims

1. Cam follower unit (2) comprising a tappet (20), a roller (22) adapted to cooperate with a cam, said roller (22) being mounted rotatably on a pin (24) which is mounted in holes (204) provided on two lateral ears (200, 202) of said tappet (20), the pin (24) being retained in the tappet (20), in the longitudinal direction (X22) of the pin (24), by elastic spring retainers (26) mounted against the ends (240, 242) of the pin (24), inside the holes (204) of the lateral ears (200, 202), wherein the elastic spring retainers (26) comprise a central portion (260), which is adapted to be in contact with the ends (240, 242) of the pin (24), the central portion (260) defining a plane (P26) perpendicular to the central axis (X22) of the pin (24), and a peripheral portion (262) adapted to exert a radial elastic force (F1) against an internal wall (S204) of the holes (204) which is circular and generated by a straight line (G204), and wherein said peripheral portion (262) extends outwardly from the central portion (260) and away from the pin (24) along directions (A262) inclined with respect to the plane (P26) defined by the central portion (260).

2. Cam follower unit according to claim 1, wherein the peripheral portion (262) is frustoconical.

3. Cam follower unit according to claim 2, wherein the peripheral portion (262) is formed by circumferential elastic tongues (262).

4. Cam follower unit according to claim 3, wherein when the tongues (262) of the elastic spring retainers (26) are unstressed, the outer diameter of the elastic spring retainers (26) is larger than the internal diameter of the holes (204) of the lateral ears (200, 202) of the tappet (20).

5. Cam follower unit according to any of claims 1 and 2, wherein the elastic spring retainers (26) are Belleville washers.

6. Cam follower unit according to any preceding claim, wherein the elastic spring retainers (26) are made of a metallic material.

7. Cam follower unit according to any of claims 1 to 5, wherein the elastic spring retainers (26) are made of a synthetic or plastic material.

8. Cam follower unit according to any preceding claim, wherein an axial force (F2) exerted by the pin (24) on the central portion (260) of the retainer (26) provokes an increase of the radial elastic force (F1).
